(19) Europäisches Patentamt
European Patent Office
Office européen des brevets

(11) **EP 4 080 732 A1**

(12) **EUROPEAN PATENT APPLICATION**
published in accordance with Art. 153(4) EPC

(43) Date of publication:
**26.10.2022 Bulletin 2022/43**

(21) Application number: **20919523.9**

(22) Date of filing: **22.12.2020**

(51) International Patent Classification (IPC):
**H02K 1/27** $^{(2022.01)}$       **H02K 1/22** $^{(2006.01)}$

(52) Cooperative Patent Classification (CPC):
**H02K 1/22; H02K 1/27**

(86) International application number:
**PCT/JP2020/047828**

(87) International publication number:
**WO 2021/166420 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2020 JP 2020025835**

(71) Applicant: **Hitachi, Ltd.**
**Tokyo 100-8280 (JP)**

(72) Inventors:
• **ITO, Makoto**
**Tokyo 100-8280 (JP)**
• **TAKAHASHI, Akeshi**
**Tokyo 100-8280 (JP)**
• **TAKEUCHI, Keisuke**
**Tokyo 100-8280 (JP)**

(74) Representative: **Manitz Finsterwald**
**Patent- und Rechtsanwaltspartnerschaft mbB**
**Martin-Greif-Strasse 1**
**80336 München (DE)**

(54) **ROTATING ELECTRIC MACHINE AND ELECTRIC WHEEL USING THIS**

(57) The purpose of the present invention is to provide a rotating electric machine which enables increasing torque density, and an electric wheel using this. This rotating electric machine is provided with a rotatably supported rotor and a stator separated by a prescribed gap from the rotor, wherein the rotor comprises a magnetic pole ring formed from a circular permanent magnet, and a core piece embedded in the permanent magnet. The magnetic pole ring has an outer peripheral surface and an inner peripheral surface formed in a ring shape, wherein one of the outer peripheral surface and the inner peripheral surface is a gap-facing surface that faces the aforementioned gap, and the other is a non-gap-facing surface different from the gap-facing surface. The non-gap-facing surface of the magnetic pole ring is configured from the permanent magnet, the gap-facing surface of the magnetic pole ring is configured containing the permanent magnet and the exposed core piece, and the permanent magnet is magnetized such that the core piece is the magnetic center.

FIG. 1

EP 4 080 732 A1

**Description**

[Technical Field]

The present invention relates to a rotating electric machine, and more particularly to an electrical wheel used in a moving body.

[Background Art]

Conventionally, there has been a demand for an increase of power output density of a rotating electric machine from a viewpoint of space saving and reduction of a cost. Power of the rotating electric machine is determined as a product of a rotational speed and a torque of the rotating electric machine. Accordingly, the increase of power density of the rotating electric machine can be realized by increasing either one of a rotational speed or a torque.

In general, it is often the case where attempts have been made to increase power density by increasing a rotational speed of a rotating electric machine. In this case, it is necessary to interpose gears between the rotating electric machine and a load. Accordingly, due to the gears which become additional constituent elements, there is a possibility that several disadvantages occur including lowering of system efficiency and lowering of reliability and, further, lowering of power density as viewed as a system due to the increase of a weight of the rotating electric machine.

On the other hand, the increase of torque density of a rotating electric machine is one of techniques for realizing the increase of power density of a rotating electric machine while making it unnecessary to use gears. In this case, the increase of reliability and the increase of power density of the system are facilitated.

As one of means that have been proposed conventionally for increasing torque density, there has been known a rotor structure that makes use of permanent magnets. A magnetized permanent magnet has a magnetomotive force. Accordingly, by making this magnetomotive force and a magnetomotive force that an electric current that flows through a coil of a stator interact with each other, torque density can be increased. More specifically, by connecting a magnetomotive force of a permanent magnet with a magnetomotive force of a coil current in series on a magnetic circuit, magnetic flux density in a gap is increased so that torque density can be increased.

As a conventionally proposed structure suitable for increasing torque density, there has been proposed a structure described in Patent Literature 1, for example. Patent Literature 1 discloses a rotor structure that has the following configuration. The rotor structure includes a plurality of magnets that are arranged in a circumferential direction. The respective magnets are formed in a symmetrical shape with respect to a q axis that is a magnetic pole boundary between d axes that are magnetic pole centers disposed adjacently to each other in the circumferential direction. Further, there has been proposed a rotor structure where an easy axis of magnetization is oriented so as to form an arcuate magnet magnetic circuit such that the easy axis of magnetization becomes parallel to the d axis or a direction that is substantially parallel to the d axis in a portion close to the d axis, and the easy axis of magnetization becomes orthogonal to the q axis or a direction substantially orthogonal to the q axis in a portion close to the q axis. In the proposed structure, the magnetization direction of the magnet takes a pseudo Halbach magnetism where a magnetic flux is concentrated toward the center of the pole and hence, a torque is increased.

As exemplified using Patent Literature 1, the conventional rotor structure uses a large amount of magnet, and adopts a rotor shape that can generate Halbach magnetization or a magnetic flux distribution close to Halbach magnetization in a pseudo manner for concentrating a magnetic flux on a pole center thus increasing torque density. This is because , to consider a magnetic circuit in a simplified manner, the rotor is filled with a permanent magnet, and the permanent magnet is magnetized along a direction of a magnetic flux that flows in the rotor. Accordingly, in view of maximizing a magnetomotive force that is acquired during a period from a point of time that a magnetic flux enters from gap surface of a certain pole to a point of time that the magnetic flux exits from a gap surface of a pole disposed adjacently to the certain pole, the conventional concept is reasonable from a viewpoint of a conventional structure. Accordingly, as exemplified in Patent Literature 1, in the conventional structure, the structure is adopted where the permanent magnet is matted between a surface of the rotor and a surface of the stator that face each other.

On the other hand, from a viewpoint of using an Nd magnet for maximizing torque density, a unit material cost of a permanent magnet is expensive compared to a unit material cost of a core. Accordingly, the conventional structure pushes up a cost of the rotor and hence, the conventional concept is not desirable in a case where the mass production of rotating electric machines is taken into consideration. Further, in the conventional concept, a rotor is not sufficiently designed such that the consumption of a magnetomotive force of the entire rotating electric machine is not taken into account. That is, the rotor is not designed in such a manner that not only a magnetomotive force of the permanent magnet of the rotor but also a relationship between the magnetomotive force of the permanent magnet of the rotor and a magnetomotive force that an electric current that flows through a wiring of the stator generates are taken into account. Accordingly, there has not been proposed a rotor structure that can further enhance torque density of a rotating electric machine.

[Citation List]

[Patent Literature]

[Patent Literature 1] Japanese Patent No. 2019-122242

[Summary of Invention]

[Technical Problem]

Accordingly, the technical problem of the present invention lies in the enhancement of torque density that can be realized by taking into account the consumption of a magnetomotive force of an entire rotating electric machine including a relationship between a magnetomotive force of a permanent magnet of a rotor and a magnetomotive force that an electric current that flows through a wiring of a stator generates.

[Solution to Problem]

To overcome the technical problem described above, as an electric rotating machine according to the present invention, there is provided an electric rotating machine that includes: a rotor that is rotatably supported; and a stator provided in a state where a gap is formed between the rotor and the stator, wherein the rotor includes a magnetic pole ring consisting of an annular circular permanent magnet and a core piece embedded in the permanent magnet, the magnetic pole ring has an inner peripheral surface and an outer peripheral surface that are formed in a circular annular shape, one of the inner peripheral surface and the outer peripheral surface of the magnetic pole ring is a gap facing surface that faces the gap, and the other is a gap non-facing surface that differs from the gap facing surface, the gap non-facing surface of the magnetic pole ring is formed of the permanent magnet, the gap facing surface of the magnetic pole ring is formed including the permanent magnet and the exposed core piece, and the permanent magnet is configured to be magnetized so that the core piece forms a pole center.

[Advantageous Effects of Invention]

The present invention can enhance torque density of a rotating electric machine.

[Brief Description of Drawings]

[FIG. 1] FIG. 1 is cross-sectional view of a rotating electric machine according to a first embodiment of the present invention.
[FIG. 2] FIG. 2 is a partial cross-sectional view of a rotor illustrated in FIG. 1.
[FIG. 3(a)] FIG. 3(a) is a partial cross-sectional view of a rotor according to the embodiment.
[FIG. 3(b)] FIG. 3(b) is a partial cross-sectional view of a stator according to the embodiment.
[FIG. 4] FIG. 4 is a block diagram illustrating a magnetic circuit model illustrating the manner of operation according to the present invention [FIG. 5(a)] FIG. 5(a) is a graph illustrating a result of calculation of the magnetic circuit model obtained by the manner of operation of the present invention.
[FIG. 5(b)] FIG. 5(b) is a graph illustrating a result of calculation of the magnetic circuit model obtained by the manner of operation of the present invention.
[FIG. 6(a)] FIG. 6(a) is a partial cross-sectional view of a rotor according a second embodiment of the present invention.
[FIG. 6(b)] FIG. 6(b) is a partial cross-sectional view of a stator according to the second embodiment of the present invention.
[FIG. 7(a)] FIG. 7(a) is a magnetic flux diagram illustrating a magnetic flux in the rotor according to the second embodiment of the present invention after the post-magnetization of the rotor is performed.
[FIG. 7(b)] FIG. 7(b) is a magnetic flux diagram illustrating a magnetic flux in the rotor according to the second embodiment of the present invention having a magnetic member 120 on a back side after the post-magnetization of the rotor is performed.
[FIG. 8] FIG. 8 is a graph illustrating a change in torque density with respect to a volume of a magnetic member according to the second embodiment of the present invention.
[FIG. 9(a)] FIG. 9(a) is a partial cross-sectional view of a rotor according a third embodiment of the present invention.

[FIG. 9(b)] FIG. 9(b) is a partial cross-sectional view of a rotor according to the third embodiment of the present invention.

[FIG. 10] FIG. 10 is a partial cross-sectional view illustrating magnetization directions of a permanent magnet according to a fifth embodiment of the present invention.

[FIG. 11] FIG. 11 is a conceptual view of a cross section of an electrically operated wheel according to a sixth embodiment of the present invention.

[Description of Embodiments]

Hereinafter, embodiments of the present invention are described in detail with reference to drawings. Although a plurality of embodiments are proposed in the present invention, the following embodiments are merely embodiments, and are not intended to limit the embodiments of the present invention to specific modes described below.

Before describing the embodiments, the manner operation of the present invention is described. According to the present invention, a magnetic flux in a magnetized permanent magnet concentrates on core pieces, and the magnetic flux passes the inside of the permanent magnet such that the magnetic flux connects the core pieces disposed adjacently to each other. Accordingly, a leaked magnetic flux in a rotor is minimally generated so that a magnetic flux can be effectively used. Further, when the post-magnetization is performed, a path of a magnetic flux that connects pole centers can be shortened with the use of the core pieces.

Accordingly, Halbach magnetization can be easily acquired in a post-magnetization step and hence, gap magnetic flux density at the pole center can be enhanced. Further, with the use of the core pieces each having high magnetic permeability at the pole center, the consumption of a magnetomotive force of the entire rotating electric machine when a load is applied can be reduced. Particularly, the consumption of a magnetomotive force that an electric current that flows through a wiring of the stator generates is reduced. Accordingly, torque density of the rotating electric machine can be enhanced.

First Embodiment

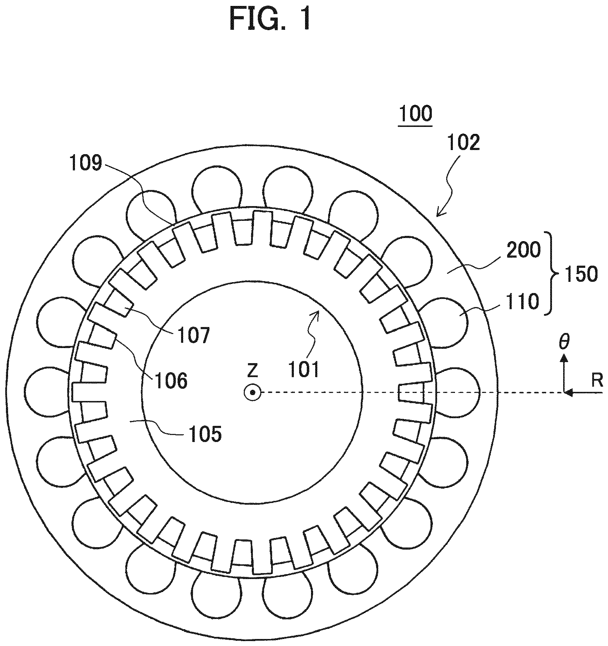

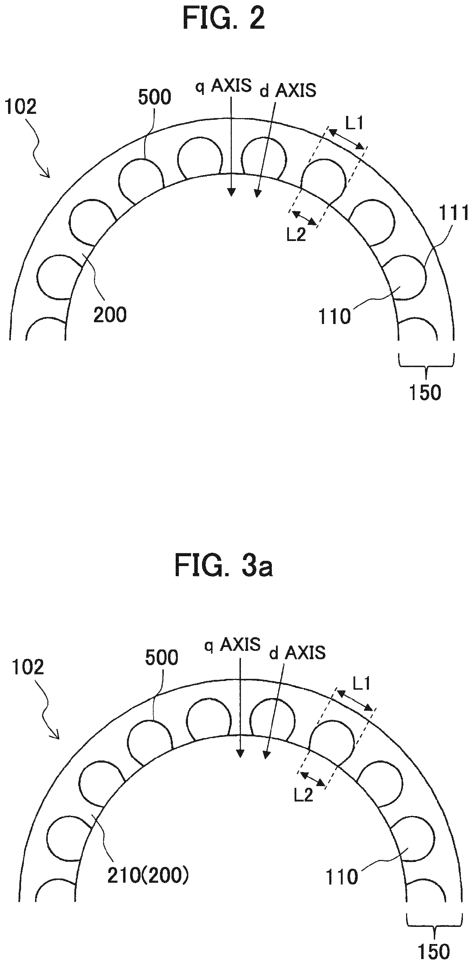

A rotating electric machine according to a first embodiment of the present invention is described with reference to FIG. 1 to FIG. 3. FIG. 1 is a cross-sectional view of a rotating electric machine according to the first embodiment of the present invention. Fig. 2 is a partial cross-sectional view of a rotor described in FIG. 1.

The rotating electric machine 100 includes: a stator 101; and a rotor 102 that is rotatably supported on an outer side of the stator 101 in a radial direction. The rotor 102 rotates about an axis of rotation Z.

Hereinafter, unless otherwise specified, with respect to terms "inner peripheral side" and "outer peripheral side", a side close to the axis of rotation Z in distance is defined as "inner peripheral side", and a side remote from the axis of rotation Z in distance is defined as "outer peripheral side". Further, "radial direction R" is defined as a straight line direction that perpendicularly intersects with the axis of rotation Z, and "circumferential direction θ" is defined as a rotational direction about the axis of rotation Z. A shaft 103 (not illustrated in the drawing) may be fixed to the rotor 102, and the rotating electric machine 100 may include a frame 104 (not illustrated in the drawing) that covers the stator 101 and the rotor 102. The rotor 102 is directly connected to a load or is connected to the load (not illustrated in the drawings) by way of a structural member such as the shaft 103, the frame 104 or the like. When the rotor 102 is rotated, the rotation and a torque are transmitted to the load. The stator 101 and the rotor 102 have the same center axis (axis of rotation Z), a gap 109 is formed between the stator 101 and the rotor 102 so that the stator 101 and the rotor 102 are arranged not to be brought into contact with each other.

The rotor 102 may be rotatably supported on an inner side of the stator 101 in the radial direction. Hereinafter, the structure where rotor 102 is disposed outside the stator 101 in the radial direction, that is, the so-called outer rotor structure is mainly described. However, by applying the substantially same configuration to the so-called inner rotor structure where the rotor 102 is disposed inside the stator 101 in the radial direction, the substantially same advantageous effects can be acquired. Particularly, unless otherwise specified, hereinafter, the direction in a radial direction R is defined as the direction that is directed from an outer peripheral side to an inner peripheral side in the case of the outer rotor, and is defined as the direction that is directed from the inner peripheral side to the outer peripheral side in the case of the inner rotor.

The stator 101 is constituted of: a stator core 105 that is formed by stacking a plurality of electromagnetic steel sheets; a plurality of stationary slots 106 formed on an outer peripheral portion of the stator core 105 in a circumferential direction; and a stationary winding 107 that is wound around the stationary slots 106.

The stator core 105 may be constituted of an integrally molded solid member. Further, the stator core 105 may be a member having the configuration that is formed by molding a powdery magnetic material by compression such as a powder magnetic core. Alternatively, the stator core 105 may be made of an amorphous metal or a nano crystal material. As a winding method of the stationary winding 107, concentrated winding, distributed winding or any other winding methods that can generate a rotating magnetic field can be used. In the case of the distributed winding, both fractional pitch winding and full-pitch winding can acquire advantageous effects of the embodiment.

The rotor 102 includes a magnetic pole ring 150 that is constituted of a permanent magnet part 200; and rotor core pieces 110 each of which is formed by stacking a plurality of electromagnetic steel sheets. A material of the permanent magnet part 200 is not restricted, and any material such as a ferritic material, a neodymium-based material or a samarium-cobalt-based material, for example, may be used.

The rotor core piece 110 may be formed of an integrally molded solid member, or a member having the configuration that is formed by molding a powdery magnetic material by compression such as a powder magnetic core. Alternatively, the rotor core piece 110 may be made of an amorphous metal or a nano crystal material.

The magnetic pole ring 150 has an even number of magnetic poles on a side that faces the gap 109, that is, a side that faces the stator 101 in a circumferential direction θ. In the embodiment, an axis that penetrates the center of each magnetic pole in the radial direction is referred to as a d axis, and an axis that penetrates the center between the d axes arranged adjacently to each other in the radial direction is referred to as a q axis.

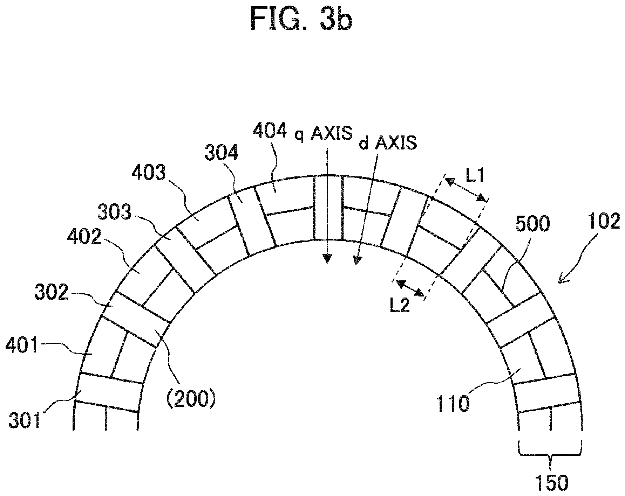

The permanent magnet part 200 is a ring magnet 210 illustrated in FIG 3(a) that is an integrally formed part having a circular annular shape, or a combined part illustrated in FIG. 3(b) that is formed by combining split magnets such as first pieces 301, 302, ... and second pieces 401, 402, ... in a circular annular shape.

Recessed portions 500 are formed on a side of the permanent magnet part 200 that faces the gap 109 on the d axes at the center of poles. The rotor core piece 110 is inserted into each recessed portion 500 formed on the permanent magnet part 200, and a portion of the rotor core piece 110 is exposed from the rotor 102 such that the portion faces the gap 109.

The split magnets (301, 302, ..., 401, 402, ...) are fixed to each other using a method such as adhesion or welding. The permanent magnet part 200 and the rotor core pieces 110 are fixed to each other using a method such as adhesion, welding, press-fitting or embedding.

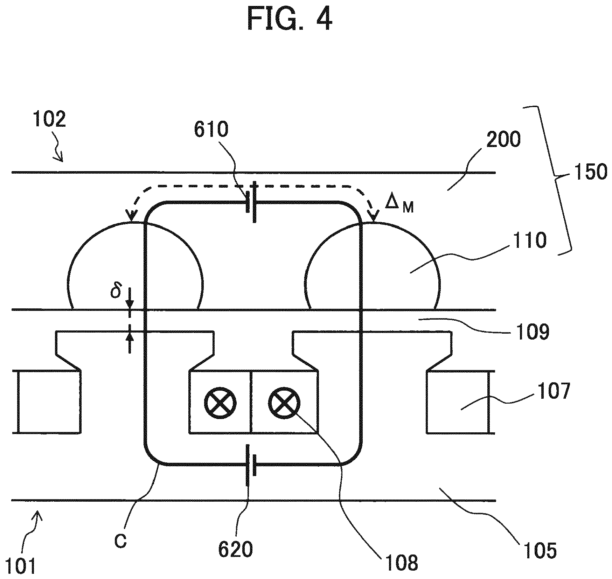

Next, the manner of operation of the rotating electric machine according to the embodiment is described. FIG. 4 illustrates a magnetic circuit model that illustrates the manner of operation of the rotating electric machine according to the embodiment. In the embodiment, to simply describe an interaction between a magnetomotive force 610 generated by a permanent magnet of the permanent magnet part 200 of the rotor 102 and a magnetomotive force 620 generated by a winding current 109 that flows through the stator winding 107 of the stator 101, a loop C formed of one magnetic flux illustrated in FIG. 4 is considered. To apply an Ampere's circuital law to this magnetic flux loop C, the following equation is established.

[Equation (1)]

$$2H_\delta \delta + H_M \Delta_M = \Theta$$

In the equation (1), $H_\delta$ is a magnetic field of the gap 109, $H_M$ is a width in the radial direction (R) of the gap 109 in a magnetic field δ of the permanent magnet part 200. $\Delta M$ is a representative width of the permanent magnet part 200. In the equation, $\Delta M$ is defined as an average distance of a magnetic flux path that is connected between rotor core pieces 110 disposed adjacently to each other. $\Theta$ is an ampere turn per pole generated by a winding current 108. Magnetic permeability of the stator core 105 and magnetic permeability of the rotor core piece 110 are sufficiently large compared to magnetic permeability of the gap 109 and the magnetic permeability of the permanent magnet part 200. Accordingly, the magnetic permeability of the stator core 105 and the magnetic permeability of the rotor core piece 110 are treated as infinite. A leaked magnetic flux is minimally generated on the magnetic path and hence, assuming that a leaked magnetic flux exists, the magnetic flux density on the loop C of the magnet flux is always constant and is expressed by the following equation.

[Equation (2)]

$$B_\delta = \mu_M H_M + B_r$$

In the equation, $B_\delta$ is magnetic flux density, and more particularly, magnetic flux density of the gap 109. $\mu M$ is magnetic permeability of the permanent magnet part 200, $B_r$ is residual magnetic flux density of the permanent magnet part 200. The magnet field $B_r$ is residual magnetic flux density of the permanent magnet part. Further, the magnetic field $H_\delta$ of the gap 109 and the magnetic flux density $B_\delta$ of the gap 109 have the following relationship.

[Equation (3)]

$$B\delta = \mu_0 H\delta$$

By putting the equation (2) and the equation (3) described above into the equation (1) so as to erase the magnetic field $H\delta$ and the magnetic field HM, due to an interaction between a magnetomotive force 610 generated by a permanent magnet of the permanent magnet part 200 of the rotor 102 and a magnetomotive force 620 generated by a winding current 108 that flows through the stator winding 107 of the stator 101, magnetic flux density $B\delta$ generated in the gap 109 is expressed by the following equation.

[equation (4)]

$$B\delta = Br + \mu_M/\Delta_M\Theta/1 + 2\ \mu_M\delta/\mu_0\Delta_M$$

In the equation (4), $\mu 0$ is magnetic permeability of a vacuum. Conventionally, in a concept of increasing a non-load induction magnetomotive force, there has been proposed a rotor structure that can enhance torque density of a rotating electric machine. Specifically, a magnitude of a non-load induction magnetomotive force is approximately proportional to a magnitude of a magnetic flux generated by a magnetomotive force of the permanent magnet part 200 of the rotor 102.

Accordingly, the increase of a non-load induction magnetomotive force means the increase of an amount of magnetic flux of the rotor and hence, the enhancement of torque density of a rotating electric machine has been expected. The rotor structure obtained based on such a concept is a structure where the rotor 102 is filled with the permanent magnet part 200, the permanent magnet is magnetized along the direction of a magnetic flux that flows in the rotor, and the rotor core pieces 110 that face the gap 109 are not provided (patent document 1).

In such a conventional rotor structure, a magnetomotive force that is obtained during a period that a magnetic flux that enters from a gap 109 surface of one magnetic pole exits from a gap 109 surface of the other magnetic pole is maximized and hence, a non-load induction magnetomotive force can be increased with certainty.

Accordingly, an amount of magnetic flux of the rotor can be increased and hence, torque density of the rotating electric machine can be enhanced to some extent. This situation corresponds to a case where an ampere turn $\Theta$ per pole is not taken into consideration in the equation (3). In this case, a conclusion is deduced that, to maximize the flux density B of the gap 109, it is sufficient to maximize an average distance $\Delta M$ of a magnetic flux path of the permanent magnet part 200 and the rotor core pieces 110 are unnecessary.

However, in this conventional design concept, an interaction with an ampere turn $\Theta$ per pole is ignored. Accordingly, the conventional design concept is still less than optimum to provide the structure that can sufficiently enhance torque density of the rotating electric machine 100. Particularly, the permanent magnet part 200 having small magnetic permeability generates a large magnetic resistance against a magnetomotive force component on a stator 101 side, that is, against a magnetomotive force that an ampere turn $\Theta$ per pole. Accordingly, the permanent magnet part 200 having small magnetic permeability also becomes a factor that decreases the flux density B of the gap 109 and the torque density of the rotating electric machine 100.

Accordingly, it is not sufficient to simply maximize an average distance $\Delta M$ of the magnet flux path of the permanent magnet part 200, and there exists an appropriate value of $\Delta M$ corresponding to a magnitude of an ampere turn $\Theta$ per pole.

Actually, in an ampere turn $\Theta$ that has a larger value than an ampere turn $\Theta$ where $B\delta = Br$ in the equation 4, the smaller the average distance $\Delta M$, the larger the magnetic flux density $B\delta$ of the gap 109 becomes. Specifically, in a case where the ampere turn $\Theta$ per pole satisfies an equation (5), the smaller the average distance $\Delta M$, the larger the magnetic flux density B of the gap 109 becomes.

[Equation 5]

$$\Theta > (2B\gamma/\mu 0)\delta$$

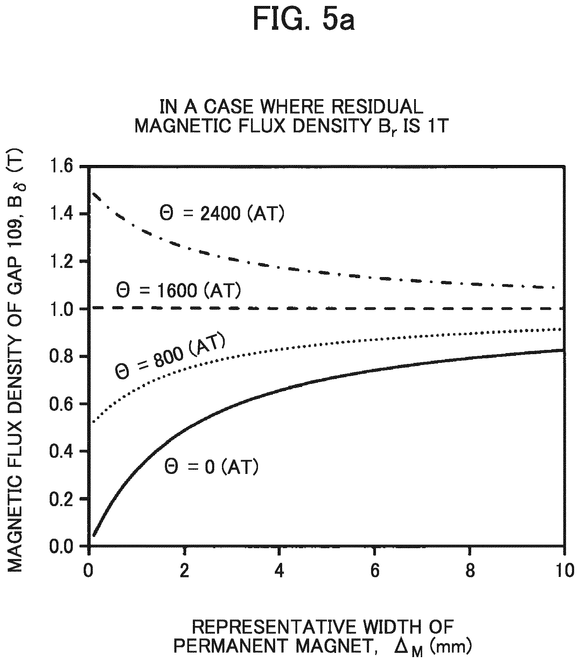

In general, the residual magnetic flux density Br of the permanent magnet is approximately several 100 mT to 1 T, and a width of the gap 109 in the radial direction is approximately 1 mm. FIG. 5(a) illustrates the relationship of the magnetic flux density **B**δ of the gap 109 with respect to a representative width ΔM of the permanent magnet part 200 when the residual magnetic flux density Br of the permanent magnet is approximately several 1 T and the width of the gap 109 in the radial direction is 1 mm.

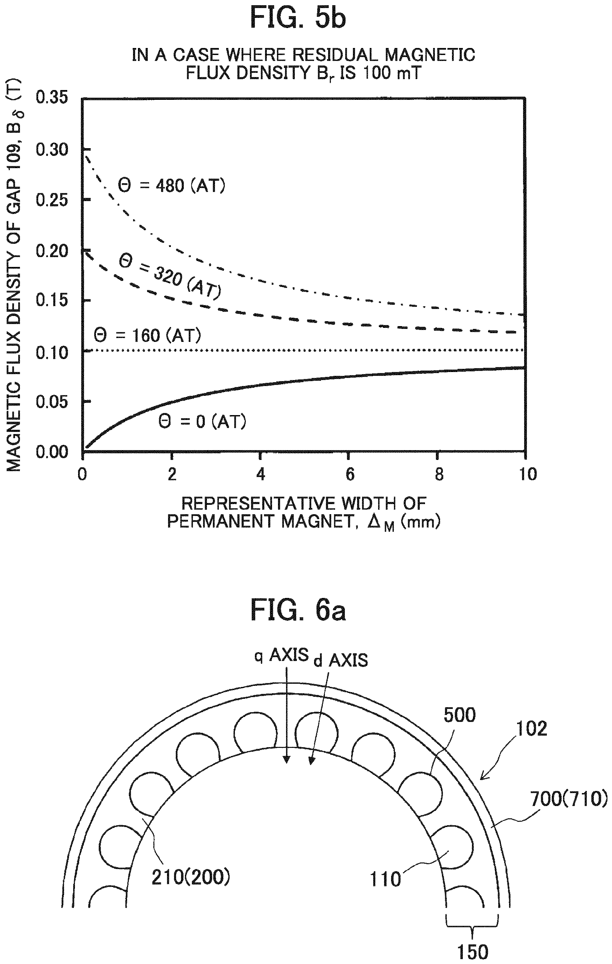

FIG. 5(a) illustrates a tendency where, when Θ is equal to or more than 1600 AT, the magnetic flux density Bδ of the gap 109 can be enhanced by reducing the representative width ΔM of the permanent magnet part 200. In the same manner, FIG. 5(b) illustrates the relationship between the magnetic flux density Bδ of the gap 109 with respect to the representative width ΔM of the permanent magnet part 200 when the residual magnetic flux density Br of the permanent magnet is approximately 100 mT to 1 T and a width of the gap 109 in the radial direction is approximately 1 mm. FIG. 5(b) illustrates a tendency where, when Θ is equal to or more than 160 AT, the magnetic flux density Bδ of the gap 109 can be enhanced by reducing the representative width ΔM of the permanent magnet part 200.

As described above, by setting Θ to a large value in accordance with the equation 5 corresponding to the residual magnetic flux density Bγ, an effect on the consumption of a magnetomotive force in the permanent magnet part 200 is large, and the smaller the average distance ΔM of the magnetic flux path of the permanent magnet part 200, torque density of the rotating electric machine 100 is enhanced. A range of an ampere turn approximately from 200 AT to 1600 AT is a range that is frequently used in the rotating electric machine 100 having a large capacity. A mechanical directional width between the poles is determined based on a diameter of the rotor 102 and the number of poles. Accordingly, by arranging the core piece 110 on the d axis as in the case of the structure according to the present invention, ΔM can be made small.

To further scrutinize the above reasoning, it will be concluded that the magnetic flux density B becomes maximum when ΔM is 0. However, such conclusion is unreasonable from a viewpoint that the magnetic saturation of the stator core 105 and the magnetic saturation of the rotor core pieces 110 are ignored in the reasoning of the equations 1 to 3 and, also from a viewpoint that, if the entire rotor 102 is filled with the core pieces 110, the rotor loses the polarity so that correlation does not exist between the magnetic flux density B of the gap 109 and a torque. Accordingly, in an actual rotating electric machine, an appropriate amount of the permanent magnet part 200 exists.

Further, under an operation condition of the rotating electric machine 100 having a small winding current 108, an effect of enhancing torque density by a residual magnetic flux (density By) of the permanent magnet part 200 is large. Accordingly, to enhance torque density of the rotating electric machine 100 under various operation conditions, the existence of the permanent magnet part 200 is still necessary.

As described above, in the structure according to the embodiment, the recessed portions 500 are formed at the pole centers of the permanent magnet part 200 of the rotor 102, and the rotor core piece 110 is disposed in the respective recessed portions 500 of the permanent magnet part 200. With such a structure, the core pieces 110 play a role of reducing ΔM so that it is possible to enhance magnetic flux density of the gap 109 under an actual driving condition where a magnetomotive force generated by the permanent magnet part 200 and a magnetomotive force generated by an ampere turn Θ per pole interact with each other. Accordingly, torque density of the rotating electric machine 100 can be enhanced compared to the prior art.

Further, the core pieces 110 are disposed on a side that faces the gap 109 on the d axis that is the pole center and hence, a magnetic flux is concentrated on the core pieces 110 having small magnetic resistance whereby a fundamental wave component of magnetic flux density of the gap 109 is increased. Accordingly, torque density of the rotating electric machine 100 can be further enhanced.

The basic structure and the manner of operation of the rotating electric machine 100 according to the present invention have been described heretofore. Hereinafter, the detail of the structure of the core piece 110 and the secondary advantageous effects brought about by the core piece 110 are described.

First, in the structure illustrated in FIG. 1 to FIG. 3, the exposed surface of the permanent magnet part 200 and the exposed surfaces of the core pieces 110 that face the gap 109 are formed coplanar with each other. For example, in FIG. 3(a), an inner-diameter-side surface (an exposed surface that faces the gap 109) of a ring magnet 210 and inner-diameter-side surfaces of the core pieces 110 are coplanar with each other. Further, inner-diameter-side surfaces of the split magnets (301, 302, 302, ...) and inner-diameter-side surfaces of the core pieces 110 are coplanar with each other. These coplanar surfaces can be formed into a circular cylindrical surface that is defined by one radius by performing a machined finish or by performing integral molding in conformity with a cylindrical columnar mold.

By forming the surface of the permanent magnet part 200 and the surfaces of the core pieces 110 that face the gap 109 coplanar with each other, when the rotor 102 rotates, unevenness of the exposed surfaces that face the gap 109 can be made small and hence, friction resistance can be reduced. Particularly, the coplanar surface is formed of the circular cylindrical surface that is defined by one radius and hence, unevenness on the exposed surfaces that face the gap 109 can be eliminated and hence, friction resistance can be minimized. Accordingly, an amount of loss caused by the friction resistance can be reduced. Further, the efficiency of the rotating electric machine can be enhanced by the reduction of the loss caused by the friction resistance.

Further, in the structure illustrated in FIG. 2, with respect to the core piece 110, by defining a circumferential-direction maximum width of a region embedded in the permanent magnet part 200 as L1, and by defining a circumferential-direction width exposed from the permanent magnet part 200 as L2, the relationship of L1 > L2 is established. In FIG. 2, the case where the permanent magnet part 200 is formed of the ring magnet 210. However, the same goes for the case where the permanent magnet part 200 is formed of the split magnets (301, 302, ..., 401, 402, ...).

In the case of an outer rotor, there is a risk that the core piece 110 is separated from the rotor 102 by a magnetic attraction force. In the case of an inner rotor, there is a risk that the core piece 110 is separated from the rotor 102 by a magnetic attraction force and a centrifugal force. To the contrary, in the rotor 102 that satisfies the relationship of L1 > L2, the width L2 of the permanent magnet part 200 and the width L1 of the core piece 110 interfere with each other so that a risk that the core piece 110 is separated from the rotor 102 is reduced. Further, by satisfying the relationship of L1 > L2, an amount of magnet on a gap 109 side is increased, and a sufficient core volume can be ensured in a region of the core piece 110 having the width L1 and hence, magnetic saturation minimally occurs. Accordingly, an amount of magnet can be increased while alleviating magnetic resistance in the core piece 110 and hence, magnetic flux density of the gap 109 can be increased. Accordingly, torque density of the rotating electric machine 100 can be enhanced.

Second Embodiment

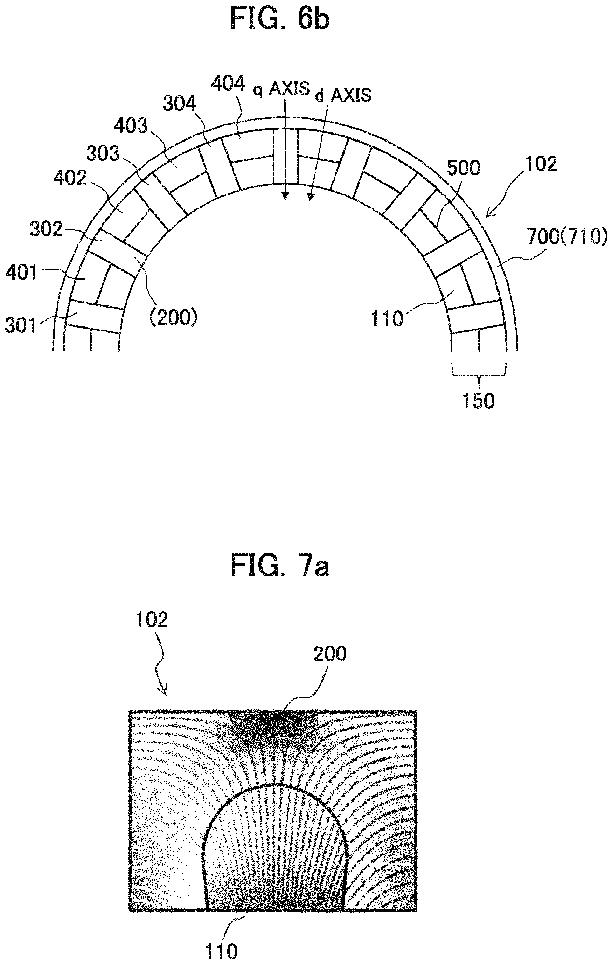

Next, a second embodiment is described with reference to FIG. 6 to FIG. 9. FIG. 6(a) is a partial cross-sectional view of a rotor according a second embodiment of the present invention. FIG. 6(a) illustrates the structure where a ring magnet 210 is applied to a permanent magnet part 200. FIG. 6(b) is a partial cross-sectional view of a stator according to the second embodiment of the present invention. FIG. 6(b) illustrates the structure where split magnets (301, 302, ..., 401, 402, ...) are applied to the permanent magnet part 200. Matters that overlap with the corresponding matters in the first embodiment are omitted.

A rotor 102 according to the second embodiment has a non-magnetic region 700 made of a non-magnetic material on a side that faces a gap 109 in the radial direction. That is, in the case of the outer rotor structure as described in FIG. 6(a) and FIG. 6(b), the non-magnetic region 700 made of a non-magnetic material is disposed on an outer peripheral side of the rotor 102. In the case of the inner rotor structure, the non-magnetic region 700 made of a non-magnetic material is disposed on an inner peripheral side (hereinafter referred to as a back side) of the rotor 102.

The non-magnetic region 700 may be formed of a non-magnetic ring 710 formed by molding using a non-magnetic material. The non-magnetic region 700 may be formed of a non-magnetic space 720 (not illustrated in the drawing) that is filled with a non-magnetic liquid or gas. The non-magnetic region 700 can also function as a frame 104 of a rotor 102. In this case, a mass of a rotating electric machine 100 is not increased even when the rotating electric machine 100 has the non-magnetic region 700.

By providing the non-magnetic region 700 as in the case of this structure, in performing magnetization of the permanent magnet part 200 in a step that is performed later, the magnetization direction of the permanent magnet part 200 is directed in the direction that minimizes the consumption of a magnetomotive force in the rotor 102. Accordingly, torque density of the rotating electric machine 100 can be enhanced.

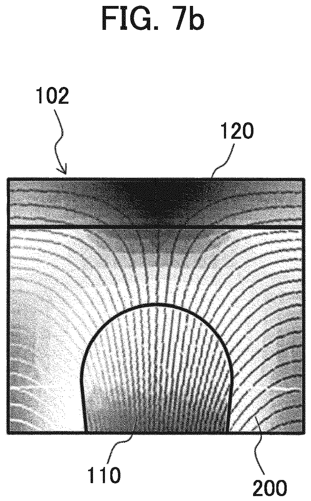

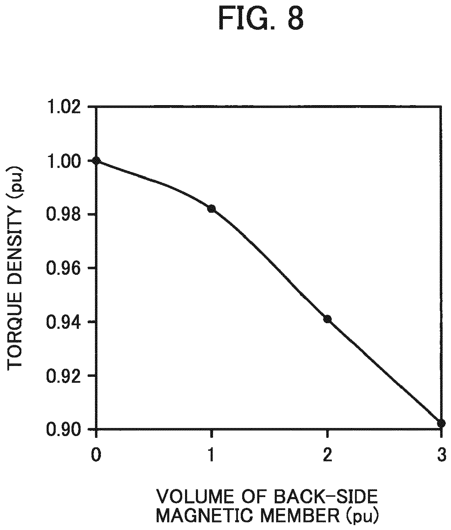

This phenomenon is described with reference to FIG. 7 and FIG. 8. FIG. 7(a) is a magnetic flux diagram illustrating a magnetic flux in the rotor 102 according to the embodiment of the present invention after the post-magnetization of the rotor 102 is performed. FIG. 7(b) is a magnetic flux diagram illustrating a magnetic flux in the rotor 102 having a magnetic member 120 on a back side after the post-magnetization of the rotor 102 is performed different from the embodiment.

To look at the magnetic flux distribution, in the case of the embodiment illustrated in FIG. 7(a), the permanent magnet part 200 is magnetized such that a magnetic flux connects the rotor core pieces 110 with a shortest distance. Accordingly, the consumption of a magnetomotive force in the rotor 102 can be minimized.

On the other hand, in the case where the non-magnetic region is not formed on the back side as illustrated in FIG. 7(b), a part of a magnetic flux is guided to the back side in a magnetization step, and a state where the part of the magnetic flux after magnetization is leaked to the back side is continued. The magnetic member 120 on the back side simply forms magnetic resistance and hence, the consumption of a magnetomotive force in such a place is increased and, further, a mass of the rotating electric machine 100 is increased by an amount of mass of the magnetic member 120 whereby torque density is decreased.

FIG. 8 is a graph illustrating a change in torque density with respect to a volume of the magnetic member 120. As can be clearly understood from FIG. 8, along with the increase of the magnetic member 120 on the back side, torque density is lowered. The case where torque density is highest is the case where the magnetic member 120 does not exist, that is, the case according to the present invention where the non-magnetic region 700 is formed on the back side.

Further, particularly, in the case where the rotor 102 is an outer rotor, by using the non-magnetic ring 710 as the non-magnetic region 700, the non-magnetic ring 710 can be used as a strength reinforcing member. In the case where the non-magnetic ring 710 is not used, due to a centrifugal force that is generated when the rotor 102 rotates, a circumferential stress referred to as a hoop stress is generated in the permanent magnet part 200. The permanent magnet part 200 is made of a brittle material in general and hence, there is a concern that the permanent magnet part 200 ruptures due to the hoop stress. To the contrary, in the case where the non-magnetic ring 710 is used, the non-magnetic ring 710 can support a centrifugal force load generated when the rotor 102 rotates. Accordingly, it is possible to reduce a stress that occurs in the permanent magnet part 200 that is made of a brittle material in general and hence, reliability on a strength of the rotor 102 can be enhanced. Further, it is possible to rotate the robust rotor 102 at a high rotational speed and hence, the structure according to the embodiment can also be used as a high speed rotating electric machine.

Third Embodiment

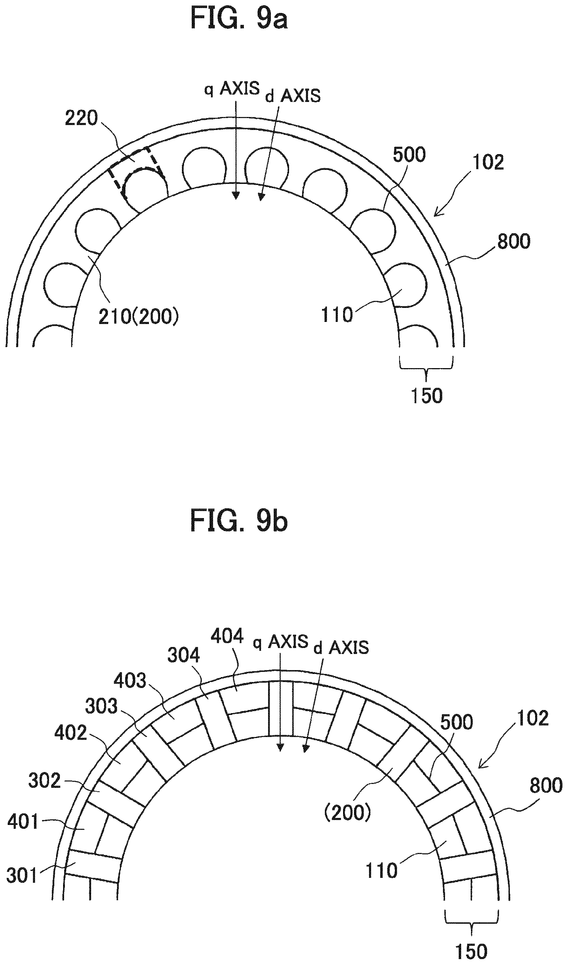

Next, a third embodiment is described with reference to FIG. 9. FIG. 9(a) is a partial cross-sectional view of a rotor according to the third embodiment of the present invention, and illustrates the structure in a case where a ring magnet 210 is applied to a permanent magnet part 200. FIG. 9(b) is a partial cross-sectional view of a rotor according to the third embodiment of the present invention, and illustrates the structure in a case where split magnets (301, 302, ..., 401, 402, ...) are applied to form the permanent magnet part 200. Matters that overlap with the corresponding matters in the first embodiment are omitted.

The rotor 102 according to the third embodiment has a back yoke 800 that is formed by stacking a plurality of electromagnetic steel plates on a back side. The back yoke 800 may be formed of a solid member that is an integrally molded body, may have the configuration such as a powder magnetic core obtained by applying compression-molding to a powdery magnetic material, or may be formed using amorphous metal or a nano-crystal material.

The structure according to the embodiment has the back yoke 800 and hence, it is possible to prevent a magnetic flux from being leaked to the outside of a rotating electric machine 100. Particularly, in FIG. 9(a), when a region 220 on a d axis of the ring magnet 210 of a permanent magnet part 200 is magnetized in the radial direction, or the split magnets (401, 402, ...) of the permanent magnet part 200 are magnetized in the radial direction in FIG. 9(b), the back yoke 800 guides a magnetic flux that intends to be leaked to a back side of the rotor 102 onto the d axes disposed adjacently to each other. Accordingly, a leaked magnetic flux of the rotor 102 is reduced. Accordingly, magnet flux density of a gap 109 is enhanced so that torque density of the rotating electric machine 100 can be enhanced.

Fourth Embodiment

Next, the fourth embodiment is described with reference to the drawings that have already been used heretofore. In the structure illustrated in FIG 2 and FIG. 3(a), embedded surfaces of core pieces 110 embedded in a permanent magnet part 200 have a curved surface 111 having a finite radius of curvature as viewed in a radial direction. The definition of the direction of the radial direction is, as set forth above, the direction directed from the outer peripheral side to the inner peripheral side in the case of the outer rotor, and the direction directed from the inner peripheral side to the outer peripheral side in the case of the inner rotor.

For example, in FIG. 3(a), the embedded surface of the core piece 110 embedded in the ring magnet 210 has a protruding shape having a finite radius of curvature, and a protrusion has a shape that is directed toward an outer peripheral side.

By adopting the structure according to the embodiment, a magnetic flux that passes the permanent magnet part 200 and is connected between magnetic poles has a streamline shape and hence, it is possible to prevent the local concentration of the magnetic flux. Accordingly, the local magnetic saturation of the core piece 110 can be alleviated and hence, torque density of the rotating electric machine 100 can be enhanced. Particularly, in a case where the permanent magnet part 200 is magnetized by post magnetization, by allowing the magnetic flux to pass between the core pieces 110, the magnetic flux that starts from the curved surface 111 of one pole and reaches the curved surface 111 of the other pole is distributed on a smooth approximately circular arc.

That is, the permanent magnet part 200 can be magnetized with the magnetic flux distribution where irregularities of a magnetic path length of a magnetic flux that passes respective positions of the curved surface 111 become small. Accordingly, an amount of electric current necessary for magnetization can be reduced and hence, a manufacturing cost can be reduced. Alternatively, without forming regions where the magnetization is insufficient locally, the permanent magnet part 200 can be magnetized with a small amount of electric current.

Further, it is possible to maximize an advantageous effect of the present invention by making a vertex of the curved surface 111 in the radial direction overlap with the d axis that is a pole center of each magnetic pole.

Fifth Embodiment

Next, a fifth embodiment is described with reference to FIG. 3(b) that has been used heretofore. In the structure illustrated in FIG. 3(b), a permanent magnet part 200 is formed of the split magnets (301, 302, ..., 401, 402, ...). In FIG. 3 (b), the split magnets are formed by combining the first pieces 301, 302, ..., and the second pieces 401, 402, ..., in a circular annular shape. However, provided that the number of pieces is two or more, the advantageous effect of the embodiment can be acquired. Further, the advantageous effect of the embodiment can be acquired by setting a splitting direction to any directions such as a radial direction R, a circumferential θ direction and a rotary-axis Z direction.

By adopting the structure according to the present embodiment, a microscopic gap is formed between the respective split magnets of the permanent magnet part 200 and hence, contact resistance is generated at a contact portion between the split magnets. Accordingly, an effect that the split magnets are electrically separated from each other can be acquired and hence, an eddy current minimally flows between the split magnets in a straddling manner.

With such a configuration, an eddy current generated in the permanent magnet part 200 and an eddy current loss can be reduced and hence, efficiency of the rotating electric machine 100 can be enhanced. Particularly, in a case where the split magnets are coated with an insulation film or the like, an eddy current that flows between the split magnets in a straddling manner can be ignored and hence, the efficiency of the rotating electric machine 100 can be further enhanced. Particularly, by splitting the permanent magnet part 200 along the axis of rotation or in the Z direction, an eddy current in the permanent magnet part 200 and an eddy current loss can be reduced.

Particularly, it is unnecessary that all of the split magnets (301, 302, ..., 401, 402, ...) are formed of the same kind of permanent magnet, and the permanent magnet part 200 may be formed by combining different kinds of magnets.

Particularly, as illustrated in FIG. 3(b), in the structure where the first pieces 301, 302, ... of the split magnets face the gap 109, and the second pieces 401, 402, ... of the split magnets do not face the gap 109, a permanent magnet having a higher coercive force than the second piece can be selected as a permanent magnet for forming the first piece. A magnetic flux of the rotating electric machine 100 concentrates on a periphery of the gap 109 and hence, by increasing a coercive force of the first pieces 301, 302, ..., a demagnetization strength of the rotor 102 can be enhanced. In general, a coercive force and a residual magnetic flux density of the permanent magnet have the trade-off relationship. Accordingly, as the second pieces 401, 402, ..., a magnet having a high residual magnetic flux density while having a lower coercive force than the first pieces 301, 302, ... can be used. With such a configuration, it is possible to enhance torque density of the rotating electric machine 100 while enhancing the demagnetization strength.

In the same manner, an Nd sintered magnet can be used as the first pieces 301, 302, ..., and an Nd bond magnet can be used as the second pieces 401, 402, .... To compare the Nd sintered magnet with the Nd bond magnet, in general, the Nd sintered magnet has a higher coercive force than the Nd bond magnet, while the Nd bond magnet can easily set the magnetization direction more freely than the Nd sintered magnet. The reason that the Nd bond magnet has the degree of freedom in the magnetization direction is that the Nd bond magnet is an isotropic magnet so that the Nd bond magnet can easily perform Halbach magnetization or the like, for example.

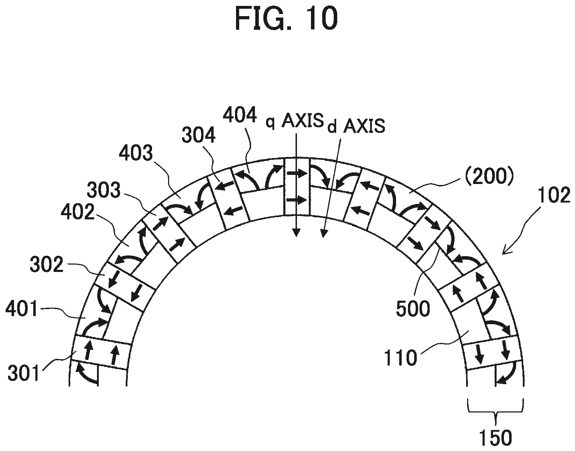

FIG 10 illustrates an example of magnetization that can be performed in a case where the Nd sintered magnet is used as the first pieces 301, 302, ..., and the Nd bond magnet is used as the second pieces 401, 402, .... The Nd sintered magnets that form the first pieces 301, 302, ... are anisotropic magnets and hence, the Nd sintered magnets are magnetized in one direction. On the other hand, the Nd bond magnets that form the second pieces 401, 402, ... are anisotropic and hence, the Nd bond magnets are magnetized in the direction that is directed from a contact surface with the first pieces 301, 302, ... toward a contact surface with the core pieces 110 (or in the opposite direction).

In this manner, by combining the Nd sintered magnets with the Nd bond magnets, the permanent magnet part 200 that has obtained pseudo Halbach magnetization can be formed by the combined structure of the split magnets. Accordingly, a magnetic flux can be concentrated on the core pieces 110 so that magnetic flux density of the gap 109 can be enhanced whereby torque density of the rotating electric machine 100 can be enhanced. Further, in general, the Nd bond magnet has a higher magnetic permeability than the Nd sintered magnet and hence, magnetic resistance of the second piece against a magnetomotive force 620 generated by a winding current 108 that flows through a stator winding 107 of a stator 101 is reduced.

Accordingly, magnetic flux density that the winding current 108 generates in the gap 109 can be enhanced and hence, torque density of the rotating electric machine 100 can be further enhanced.

As another magnet split pattern, the permanent magnet part 200 may be split on d axes that are pole centers, There exists no circumferential direction component of a magnetic flux on the d axis and hence, even when the permanent magnet part 200 is split on the d axes, a magnetic characteristic is not affected, Accordingly, it is possible to prevent worsening of torque density that may occur due to splitting of the permanent magnet part 200.

Further, as another magnet split pattern, the permanent magnet part 200 may be split on the q axes each of which exists between the pole centers. With such a configuration, at the time of the manufacture, it is possible to integrally mold the core piece 110 amounting one pole and the permanent magnet part 200. For example, assembling and magnetization can be performed for each pole. Particularly, in performing the post magnetization, a magnetization yoke can be arranged at three surfaces in total consisting of a surface on a gap 109 side and two surfaces on sides in the circumferential direction and hence, an electric current necessary for magnetization can be reduced. Accordingly, the rotating electric machine 100 can be manufactured easily thus enhancing the productivity of the rotating electric machine 100.

Sixth Embodiment

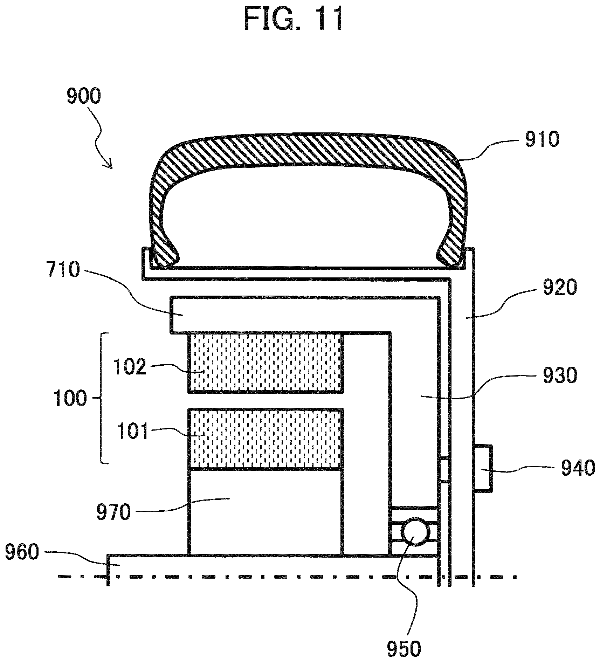

A sixth embodiment is described with reference to FIG. 11. FIG. 11 is a conceptual view of a cross section of an electrically operated wheel 900 according to the sixth embodiment of the present invention. As the electrically operated wheel 900, a rotating electric machine 100 of an outer rotor type is used.

A rotor 102 of the rotating electric machine 100 has a non-magnetic ring 710 on an outer peripheral side. The rotor 102 also functions as a rotor frame 930. The rotor frame is formed of a carbon fiber material or a non-magnetic metal member, or is formed by joining these materials.

However, the ring 710 portion is made of a non-magnetic material. The rotor frame 930 is connected to a wheel 920 by a connecting member 940. A tire 910 is fitted on the wheel 920. To allow the wheel 920 and the rotor 102 to be rotatably supported on a shaft 960, either the wheel 920 or the rotor frame 930 is connected to the shaft 960 by way of a bearing 950.

On the other hand, a stator 101 of the rotating electric machine 100 is fixedly supported on the shaft 960 by a support member (omitted in the drawing), and an electric circuit 970 is also mounted on the support member. The electric circuit 970 supplies electricity to the stator 101, and rotates the rotor 102. The rotation of the rotor 102 is transmitted to the wheel 920 by way of the rotor frame 930 that has the non-magnetic ring 710 and the connecting member 940, and rotates the wheel 920.

By adopting the structure according to the embodiment, torque density of the rotating electric machine 100 is high and hence, the rotating electric machine 100 can not only be housed in the wheel 920 on an inner peripheral side but also eliminate gears, that is, perform direct driving of the wheel 920.

A conventional electrically operated wheel uses gears and hence, the conventional electrically operated wheel has drawbacks such as wear and noises of gears, the increase of the number of bearings to be used for supporting gears. To the contrary, with respect to the electrically operated wheel 900 that uses the rotating electric machine 100 according to the present invention having high torque density, the electrically operated wheel 900 does not require the gears and hence, maintenance which takes into account wear of gears becomes unnecessary and, further, there are no noises generated from the gears since the gears are not used. Further, an amount of bearings to be used can be minimized and hence, a friction risk of the bearings can be reduced, and an amount of maintenance operation such as an exchange of grease in the bearings can be reduced.

Further, the volume of the rotating electric machine 100 is small and hence, the electric circuit 970 can also be mounted in the wheel 920 and hence, the electrically operated wheel 900 can be made small and light-weighted.

[Reference Signs List]

100: rotating electric machine
101: stator
102: rotor
103: shaft
104: frame
105: stator core
106: stator slot
107: stator winding
108: winding current
109: gap
110; rotor core piece
111: core piece curved surface
120: magnetic member
150: magnetic pole ring
200: permanent magnet part
210: ring magnet
220: region on d axis of ring magnet
301: split magnet (first piece)
302: split magnet (first piece)
401: split magnet (second piece)
402: split magnet (second piece)

500: recessed portion
610: magnetomotive force
620: magnetomotive force
700: non-magnetic region
710: non-magnetic ring
720: non-magnetic space
800: back yoke
900: electrically operated wheel
910: tire
920: wheel
930: rotor frame
940: connecting member
950: bearing
960: shaft
970: electric circuit
999: load
Z: center of rotation
R: radial direction
θ: circumferential direction
C: magnetic flux loop

**Claims**

1. An electric rotating machine comprising:

   a rotor that is rotatably supported; and
   a stator provided in a state where a gap is formed between the rotor and the stator, wherein
   the rotor includes a magnetic pole ring consisting of an annular circular permanent magnet and a core piece embedded in the permanent magnet,
   the magnetic pole ring has an inner peripheral surface and an outer peripheral surface that are formed in a circular annular shape,
   one of the inner peripheral surface and the outer peripheral surface of the magnetic pole ring is a gap facing surface that faces the gap, and the other is a gap non-facing surface that differs from the gap facing surface,
   the gap non-facing surface of the magnetic pole ring is formed of the permanent magnet,
   the gap facing surface of the magnetic pole ring is formed including the permanent magnet and the exposed core piece, and
   the permanent magnet is configured to be magnetized so that the core piece forms a pole center.

2. The electric rotating machine according to claim 1, wherein the magnetic pole ring is brought into contact with a non-magnetic material or a non-magnetic fluid on the gap non-facing surface.

3. The electric rotating machine according to claim 1, wherein the magnetic pole ring is brought into contact with a circular annular member made of a magnetic material on the gap non-facing surface.

4. The electric rotating machine according to any one of claims 1 to 3, wherein the permanent magnet and an exposed surface of the core piece are coplanar with each other.

5. The electric rotating machine according to any one of claims 1 to 4, wherein an embedded surface of the core piece embedded in the permanent magnet has a curved surface having a predetermined radius of curvature as viewed in a radial direction from the gap non-facing surface.

6. The electric rotating machine according to claim 5, wherein a vertex of the curved surface in the radial direction overlaps with the pole center.

7. The electric rotating machine according to any one of claims 1 to 6, wherein, by defining a circumferential-direction maximum width of a region of the core piece embedded in the permanent magnet as L1, and by defining a circumferential-direction width of a surface of the core piece that is exposed from the permanent magnet as L2, a relationship of L1 > L2 is established.

8. The electric rotating machine according to any one of claims 1 to 7, wherein the core piece is disposed at a position where the core piece is exposed from an inner-diameter-side surface of the permanent magnet, and
the rotor is brought into contact with the non-magnetic support member on the gap non-facing surface.

9. The electric rotating machine according to any one of claims 1 to 8, wherein the permanent magnet having the circular annular shape is formed of at least two or more pieces arranged along a circumferential direction.

10. The electric rotating machine according to claim 9, wherein the permanent magnet having the circular annular shape is configured such that a coercive force of a first piece that faces the gap is higher than a coercive force of a second piece that forms a piece other than the first piece.

11. A rotor of the electric rotating machine according to claim 10, wherein the first piece is an Nd sintered magnet, and the second piece is an Nd bond magnet.

12. The rotor of the electric rotating machine according to any one of claims 9 to 11, wherein the permanent magnet having a circular annular shape is split at a position that overlaps with a pole center in a circumferential direction.

13. The rotor of the electric rotating machine according to any one of claims 9 to 11, wherein the permanent magnet having a circular annular shape is split in a region between pole centers disposed adjacently to each other in a circumferential direction.

14. An electrically operated wheel that uses the electric rotating machine according to claim 8, wherein the non-magnetic support member is connected to a wheel member, and is made of a carbon fiber material or a non-magnetic metal member.

# FIG. 1

# FIG. 2

# FIG. 3a

# FIG. 3b

# FIG. 4

# FIG. 5a

IN A CASE WHERE RESIDUAL
MAGNETIC FLUX DENSITY $B_r$ IS 1T

MAGNETIC FLUX DENSITY OF GAP 109, $B_\delta$ (T)

$\Theta = 2400$ (AT)

$\Theta = 1600$ (AT)

$\Theta = 800$ (AT)

$\Theta = 0$ (AT)

REPRESENTATIVE WIDTH OF
PERMANENT MAGNET, $\Delta_M$ (mm)

## FIG. 5b

### IN A CASE WHERE RESIDUAL MAGNETIC FLUX DENSITY $B_r$ IS 100 mT

MAGNETIC FLUX DENSITY OF GAP 109, $B_\delta$ (T)

$\Theta = 480$ (AT)

$\Theta = 320$ (AT)

$\Theta = 160$ (AT)

$\Theta = 0$ (AT)

REPRESENTATIVE WIDTH OF PERMANENT MAGNET, $\Delta_M$ (mm)

## FIG. 6a

q AXIS d AXIS

500
102
700(710)
210(200)
110
150

# FIG. 6b

# FIG. 7a

FIG. 7b

# FIG. 8

# FIG. 9a

# FIG. 9b

# FIG. 10

# FIG. 11

**EP 4 080 732 A1**

| | INTERNATIONAL SEARCH REPORT | International application No. |
|---|---|---|
| | | PCT/JP2020/047828 |

**A. CLASSIFICATION OF SUBJECT MATTER**
Int.Cl. H02K1/27(2006.01)i, H02K1/22(2006.01)i
FI: H02K1/27502A, H02K1/27501M, H02K1/27501A, H02K1/22A

According to International Patent Classification (IPC) or to both national classification and IPC

**B. FIELDS SEARCHED**

Minimum documentation searched (classification system followed by classification symbols)
Int.Cl. H02K1/27, H02K1/22

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2016-1972 A (DENSO CORPORATION) 07 January 2016 (2016-01-07), paragraphs [0017], [0018], [0023], [0095], fig. 25 | 1<br>2-4, 7-14<br>5-6 |
| Y | JP 2019-122242 A (DENSO CORPORATION) 22 July 2019 (2019-07-22), paragraphs [0031]-[0037], [0323], fig. 1-4 | 2, 4, 7-14 |
| Y | JP 2009-261167 A (DENSO CORPORATION) 05 November 2009 (2009-11-05), paragraphs [0011]-[0013], fig. 1, 2 | 3-4, 7-14 |
| Y | JP 2010-130818 A (DAIKIN INDUSTRIES, LTD.) 10 June 2010 (2010-06-10), paragraphs [0090]-[0092], [0124]-[0127], fig. 10 | 10-13 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 February 2021 | 16 February 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2015-133839 A (JTEKT CORPORATION) 23 July 2015 (2015-07-23), paragraphs [0004]-[0007], [0015]-[0020], fig. 1, 2 | 11-13 |
| Y | JP 2017-5857 A (DENSO CORPORATION) 05 January 2017 (2017-01-05), paragraphs [0009]-[0014], fig. 1, 2 | 12-13 |
| A | US 2013/0334922 A1 (LG INNOTER CO., LTD.) 19 December 2013 (2013-12-19), paragraphs [0081]-[0090], fig. 1-3 | 1-14 |

Form PCT/ISA/210 (second sheet) (January 2015)

**INTERNATIONAL SEARCH REPORT**
Information on patent family members

International application No.

*PCT/JP2020/047828*

| | | |
|---|---|---|
| JP 2016-1972 A | 07 January 2016 | (Family: none) |
| JP 2019-122242 A | 22 July 2019 | WO 2019/131905 A1 paragraphs [0176]-[0183], [0498], fig. 1-4 |
| JP 2009-261167 A | 05 November 2009 | (Family: none) |
| JP 2010-130818 A | 10 June 2010 | (Family: none) |
| JP 2015-133839 A | 23 July 2015 | (Family: none) |
| JP 2017-5857 A | 05 January 2017 | (Family: none) |
| US 2013/0334922 A1 | 19 December 2013 | EP 2662954 A2 KR 10-2013-0125559 A |

Form PCT/ISA/210 (patent family annex) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019122242 A